# EUROPÄISCHE PATENTSCHRIFT

(11) **EP 3 983 225 B1**
(45) Veröffentlichungstag und Bekanntmachung des Hinweises auf die Patenterteilung: **03.09.2025**
(21) Anmeldenummer: 20746876.0
(22) Anmeldetag: 09.07.2020
(51) Int. Cl.: B33Y 80/00, B22F 5/00, B22F 5/04, F01D 5/18, F01D 25/12, F28F 13/02, F28F 13/18, B33Y 10/00, B33Y 50/00, B22F 10/00

(54) **VERFAHREN ZUR VORBEREITUNG EINES PULVERBETT-BASIERTEN ADDITIVEN HERSTELLUNGSPROZESSES UND ENTSPRECHENDES COMPUTERPROGRAMMPRODUKT**
METHOD FOR PREPARING POWDER BED BASED ADDITIVE MANUFACTURING PROCESS AND CORRESPONDING COMPUTER PROGRAM PRODUCT
PROCÉDÉ DE PRÉPARATION D'UN PROCÉDÉ DE FABRICATION ADDITIF À BASE DE LIT DE POUDRE ET PROGRAMME D'ORDINATEUR CORRESPONDANT

(30) Priorität: 25.09.2019 DE 102019214667
(43) Veröffentlichungstag der Anmeldung: 20.04.2022
(73) Patentinhaber: Siemens Energy Global GmbH & Co. KG, 81739 München (DE)
(72) Erfinder: HEITMANN, Timo, 10245 Berlin (DE); ALBERT, Johannes, 13357 Berlin (DE)
(86) Internationale Anmeldenummer: PCT/EP2020/069352
(87) Internationale Veröffentlichungsnummer: WO 2021/058156

(56) Entgegenhaltungen:
- EP-A1- 2 696 028
- EP-A1- 2 778 369
- DE-A1- 102016 122 312
- DE-A1- 102016 122 313
- US-B1- 6 402 464

## Beschreibung

Die vorliegende Erfindung betrifft ein Verfahren zur Vorbereitung eines additiven, insbesondere pulverbett-basierten, Herstellungsprozesses der Komponente, ein Verfahren zur additiven Herstellung der Komponente und eine nicht unter den Schutzumfang des Anspruchs fallende Verwendung von orientierungsabhängigen Herstellungsartefakten zur Ausbildung einer bevorzugten Oberflächenbeschaffenheit der Komponente, insbesondere, welche eine verbesserte Wärmeübertragung im Betrieb der Komponente ermöglicht. Weiterhin wird ein Computerprogramm bzw. ein Computerprogrammprodukt angegeben.

Die Komponente bzw. das Bauteil ist vorzugsweise für den Einsatz in einer Strömungsmaschine, vorzugsweise im Heißgaspfad einer Gasturbine vorgesehen. Das Bauteil besteht demgemäß vorzugsweise aus einer Superlegierung, insbesondere einer nickel- oder kobaltbasierten Superlegierung. Die Legierung kann ausscheidungsgehärtet oder ausscheidungshärtbar sein.

In Gasturbinen wird thermische Energie und/oder Strömungsenergie eines durch Verbrennung eines Brennstoffs, z.B. eines Gases, erzeugten Heißgases in kinetische Energie (Rotationsenergie) eines Rotors umgewandelt. Dazu ist in der Gasturbine ein Strömungskanal ausgebildet, in dessen axialer Richtung der Rotor bzw. eine Welle gelagert ist. Wird der Strömungskanal von einem Heißgas durchströmt, werden die Laufschaufeln mit einer Kraft beaufschlagt, die in ein auf die Welle wirkendes Drehmoment umgewandelt wird, das den Turbinenrotor antreibt, wobei die Rotationsenergie z.B. zum Betrieb eines Generators genutzt werden kann.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen (Kriechbelastung, thermomechanische Ermüdung) verbessert.

Additive Fertigungsverfahren (englisch: "additive manufacturing") haben sich als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann.

Additive Herstellungsverfahren umfassen beispielsweise als Pulverbettverfahren das selektive Laserschmelzen (SLM) oder Lasersintern (SLS), oder das Elektronenstrahlschmelzen (EBM). Weitere additive Verfahren sind beispielsweise "Directed Energy Deposition (DED)"-Verfahren, insbesondere Laserauftragschweißen, Elektronenstrahl-, oder Plasma-Pulverschwei-ßen, Drahtschweißen, metallischer Pulverspritzguss, sogenannte "sheet lamination"-Verfahren, oder thermische Spritzverfahren (VPS LPPS, GDCS).

Pulverbett-basierten additiven Verfahren ("Laser Powder Bed Fusion" (LPBF)) ist gemein, dass eine Aufbaurichtung, üblicherweise eine Vertikale, verfahrens inhärent durch die Existenz und Anordnung des Pulverbettes, vorgegeben ist.

Ein Verfahren zum selektiven Laserschmelzen ist beispielsweise bekannt aus EP 2 601 006 B1.

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Die Herstellung von Kühlsystemen oder zu kühlenden Komponenten aus einem Pulverbett ist besonders vorteilhaft und vielversprechend, da auf aufwendige konventionelle Herstellungsansätze, welche eine große Zahl von Verfahrensschritten, eine sehr lange Durchlaufzeit und oft die Herstellung von separaten Werkzeugen, wie Gusswerkzeugen erfordern, verzichtet werden kann.

Der schichtweise additive Aufbau und die Abhängigkeit der aufgebauten Struktur von der Orientierung auf einer Bauplattform, führen jedoch zu mangelnder Reproduzierbarkeit und großen Schwankungen bei der Oberflächenqualität, insbesondere von Hohlräumen oder Kanälen, der entsprechend aufzubauenden Komponenten. Insbesondere bei großen Hohlräumen, Kanälen, Kavitäten oder diese definierenden überhängenden Strukturen, ist eine besonders große Rauheit bzw. Geometrieschwankungen bei inneren oder äußeren Komponentenoberflächen zu erwarten. Dies ist bedingt durch eine mangelnde mechanische Unterstützung an den überhängenden Strukturen, vor allem aber auch durch einen mangelhaften Wärmeaustrag und durch Schmelzbadabbrüche.

Überhängende Strukturen, also Strukturen, die beispielsweise bezüglich einer vertikalen Aufbaurichtung einen Überhang bilden, lassen sich bekanntlich nur schwer herstellen oder verfestigen, da ihr Schmelzbad während des Herstellungsprozesses zumindest teilweise in einen Bereich losen Pulvers hineinragt. Die Schmelzbadausdehnung übertrifft bei selektiven Schmelzverfahren nämlich üblicherweise die eingestellte Schichtdicke um ein Mehrfaches.

Um insbesondere geometrieabhängige Artefakte oder die genannten Oberflächeneigenschaften vorherzusagen oder zu beherrschen, sind insbesondere experimentelle Untersuchungen erforderlich. Diese sind wiederum mit hohen Kosten und einer langwierigen Produktentwicklung verbunden.

Bisherige Ansätze, Oberflächenrauheiten von internen Oberflächen oder Kanalstrukturen und deren Auswirkungen auf eine Kühlfunktionalität und einen Wärmeaustrag aus der entsprechenden Struktur, beispielsweise mittels so genannter CFD-Simulationen ("Computational Fluid Dynamics") vorherzusagen, scheiterten bisher ebenfalls bzw. haben sich aufgrund der Diskrepanz von Simulation und praktischem Experiment als nicht anwendbar herausgestellt. Derartige Simulationen umfassen beispielsweise Druckverlust- und Wärmeübergangsmessungen an den Kanal- oder Kavitätenflächen. Experimentelle Forschungsergebnisse zeigen insbesondere bei diesen genannten Parametern eine nicht zwangsläufig lineare Abhängigkeit.

Eine Chance, Strukturergebnis und Reproduzierbarkeit der additiven Herstellung für die beschriebenen Komponenten zu verbessern, bietet hingegen die Berücksichtigung der aufzubauenden Geometrie der Komponente, welche beispielsweise durch eine CAD-Datei gegeben sein kann, sowie der Bestrahlungsstrategie und den spezifischen Materialeigenschaften.

Es ist daher eine Aufgabe der vorliegenden Erfindung, Mittel anzugeben, die bereits in der Vorbereitung des eigentlichen Herstellungsprozesses Voraussetzungen schaffen, die additive Fertigung von komplizierten Strukturen aus Hochleistungswerkstoffen, insbesondere von Komponenten mit Kühlkanälen oder zu kühlenden Bereichen, verbessert ablaufen zu lassen, und so auch die aufzubauende Komponente selbst hinsichtlich der Strukturgüte und/oder Funktionalität entscheidend zu verbessern. Insbesondere kann durch die vorliegende Erfindung ein Einsatz der Komponente - bei gegebenem Kühlaufwand - bei noch höheren Temperaturen ermöglicht, oder entsprechend - bei gegebener Einsatztemperatur - die Kühleffizienz verbessert werden. Dies ist insbesondere von großer Bedeutung für den Wirkungsgrad (Carnot-Wirkungsgrad) von Strömungsmaschinen, welcher bekanntlich stark von den Einsatztemperaturen der beteiligten Komponenten abhängt (siehe oben).

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden , nicht unter den Schutzumfang des Anspruchs fallenden Offenbarung betrifft eine Komponente mit einem zu kühlenden Bereich bzw. eine im Betrieb zu kühlende Komponente, welche einen Kühlkanal aufweist, der angeordnet und ausgebildet ist, den Bereich der Komponente im Betrieb mittels einer Fluidströmung zu kühlen. Vorzugsweise ist der besagte Bereich thermisch und/oder mechanisch durch den Heißgaspfad einer Gasturbine oder eine vergleichbare Anwendung im Luftfahrt- oder Automobilsektor hochbelastet. Der Bereich ist vorzugsweise ein Oberflächenbereich der Komponente oder ein sonstiger, im Betrieb thermisch oder thermomechanisch besonders beanspruchter Bereich der Komponente. Der Bereich kann insbesondere eine Wand, beispielsweise eine einen Heißgaspfad definierende Wand der Komponente bezeichnen.

Der Kühlkanal ist an einer wandnahen oder dem zu kühlenden Bereich zugewandten Seite durch eine erste Kanalseite oder Kanalseitenstruktur definiert.

Weiterhin ist der Kühlkanal an einer wandfernen oder dem zu kühlenden Bereich abgewandten Seite durch eine zweite, von der erste Kanalseite verschiedenen, Kanalseite oder Kanalseitenstruktur definiert. Die erste Kanalseite bildet mit dem Kühlkanal eine größere Kontaktfläche als die zweite Kanalseite.

Im Querschnitt des Kühlkanals betrachtet können die beiden Kanalseiten den Kühlkanal, vorzugsweise vollumfänglich, umschließen.

Sobald der Kühlkanal der Komponente in ihrem bestimmungsgemäßen Betrieb mit einem Kühlfluid oder einer Fluidströmung, wie beispielsweise einem Kühlluftstrom oder einem anderen Medium durchströmt wird, resultiert für die erste Kanalseite auch eine größere für eine Wärmeübertragung an die Umgebung relevante Wechselwirkung mit dem Kühlfluid, so dass der Wärmeübergang bzw. Wärmeübertragung an der ersten Kanalseite gegenüber der zweiten Kanalseite verbessert ist.

Diese "asymmetrische" Wärmeübertragung an den Kanalseiten (erste und zweite Kanalseite) erlaubt erfindungsgemäß vorteilhafterweise gerade eine Optimierung von Kühlfluidmassenstrom und Wärmeübertragung von Wärme des thermisch belasteten Bereichs an das Kühlfluid.

In einer Ausgestaltung wird die - im Vergleich zu der zweite Kanalseite - größere Kontaktfläche der ersten Kanalseite durch eine größere Rauheit der ersten Kanalseite hervorgerufen. Eine solche vergrößerte Rauheit kann insbesondere der Komponente durch das Herstellungsverfahren inhärent aufgeprägt werden.

In einer Ausgestaltung umfasst die Rauheit einen Mittenrauwert und/oder eine quadratische Rauheit, oder stellt ein entsprechendes Maß dar. Alternativ oder zusätzlich kann es sich bei der Abschätzung der Rauheit auch um ein anderes probates oder gültiges Maß für die Rauheit der entsprechenden Oberfläche handeln.

In einer Ausgestaltung weist der Kühlkanal einen kreisförmigen Querschnitt auf. Diese Ausgestaltung kann für einfache Kanalgeometrien und entsprechend zweckmäßig ausgestaltete zu kühlende Bereiche der Komponente vorteilhaft sein.

In einer Ausgestaltung weist der Kühlkanal einen elliptischen Querschnitt auf. Diese Ausgestaltung kann insbesondere für etwas großflächigere und entsprechend zweckmäßig ausgestaltete zu kühlende Bereiche der Komponente vorteilhaft sein. Der oben beschriebene erfinderische Vorteil der Optimierung der Wärmeübertragung bei gegebener Strömung (gegebenem Massenstrom bzw. Druckverlust) lässt sich durch diese Ausgestaltung insbesondere optimieren.

In einer Ausgestaltung weist der Kühlkanal einen rautenförmigen, trapezförmigen, parallelogrammförmigen oder nicht-achsensymmetrischen Querschnitt auf. Eine solche Ausgestaltung kann weiterhin für bestimmte Kanalgeometrien und entsprechend ausgestaltete oder geformte zu kühlende Bereiche der Komponente vorteilhaft sein. Insbesondere kann das Verhältnis des Flächeninhalts von der ersten Kanalseite zu der zweiten Kanalseite bei nicht-achsensymmetrischen Querschnitten des Kühlkanals noch vergrößert werden, wodurch sich der erfinderische Vorteil der vorliegenden Erfindung noch deutlicher manifestiert.

In einer Ausgestaltung ist die Komponente eine hochtemperaturbelastbare Komponente, wie eine Turbinenkomponente, insbesondere ein Heißgasbauteil einer Gasturbine.

Ein weiterer Aspekt der vorliegenden Erfindung betrifft ein Verfahren zur Vorbereitung eines pulverbett-basierten, additiven Herstellungsprozesses gemäß dem Anspruch 1.

Die Längsachse kann bei teilweise gebogenen Kanälen vorzugsweise eine überwiegend vorherrschende Längsachse oder - ausdehnung des Kanals bezeichnen.

In einer Ausgestaltung beträgt ein Winkel zwischen einer Aufbaurichtung, beispielsweise der vertikalen Achse (z-Achse), der Komponente und einer Längsachse des Kühlkanals zwischen 10° und 80°. Insbesondere bei relativ kleinen Kühlkanaldurchmessern oder -abmessungen von weniger als 10 mm, lassen sich die erfindungsgemäßen Vorteile in dem beschriebenen Winkelbereich gut ausnutzen.

In einer Ausgestaltung beträgt der Winkel zwischen der Aufbaurichtung der Komponente und der Längsachse des Kühlkanals zwischen 30° und 60°. Diese Ausgestaltung bietet insbesondere für eine Vielzahl von Kanalgeometrien und Kanaldurchmessern die erfindungsgemäßen Vorteile.

Winkel von über 60° bedeuten insbesondere bei einer vertikalen Aufbaurichtung schon eine Ausrichtung der Kanalachse nah an einer Horizontalen, was für große Kanalgeometrien oder Hohlräume in der Komponente zu Aufbauproblemen führen kann. Bei Winkeln von unter 30° und weniger lassen sich die erfindungsgemäßen Vorteile möglicherweise deshalb nicht mehr voll ausschöpfen, da die Unterschiede in der Kontaktoberfläche von erster und zweiter Kanalseite und eine Asymmetrie in den resultierenden Geschwindigkeitsprofilen des Fluids (vergleiche nachfolgend beschriebenen Ausführungsformen) sich hier zunehmend verringern.

In einer Ausgestaltung beträgt der Winkel zwischen der Aufbaurichtung der Komponente und der Längsachse des Kühlkanals höchstens 60°.

In einer Ausgestaltung beträgt der Winkel zwischen der Aufbaurichtung der Komponente und der Längsachse des Kühlkanals mindestens 30°.

In einer Ausgestaltung beträgt der Winkel zwischen der Aufbaurichtung der Komponente und der Längsachse des Kühlkanals zwischen 20° und 70°.

Ein weiterer Aspekt der vorliegenden Erfindung betrifft ein Verfahren zur pulverbett-basierten additiven Herstellung der Komponente umfassend das beschriebene Verfahren zur Vorbereitung der Herstellung.

Ein weiterer Aspekt der vorliegenden , nicht unter den Schutzumfang des Anspruchs fallenden Offenbarung betrifft eine Verwendung von orientierungsabhängigen Herstellungsmerkmalen oder Herstellungsartefakten von additiv aus einem Pulverbett hergestellten Strukturen, zur Ausbildung einer bevorzugten Oberflächenbeschaffenheit, Abweichung, Inhomogenität oder Ungleichheit in der Oberflächenbeschaffenheit des Kühlkanals der beschriebenen Komponente, sodass eine Wärmeübertragung an einer wand- bzw. bereichsnahen Kanalseite bei gegebener Fluidströmung bzw. konstantem Massenstrom oder Druckverlust - relativ zu einer wand- bzw. bereichs fernen Kanalseite - vergrößert ist. Durch die Verwendung der beschriebenen Herstellungsmerkmale oder -artefakte lässt sich mit anderen Worten vorteilhafterweise der Kühleffekt und die Kühleffizienz von fluidgekühlten Komponentenoberflächen oder -bereichen durch eine Optimierung der Rauheit der Kanaloberflächen durch eine verbesserte Wärmeübertragung optimieren.

Ein weiterer Aspekt der vorliegenden Erfindung betrifft ein Computerprogrammprodukt gemäß dem Anspruch 6.

Ein Computerprogrammprodukt, wie z.B. ein Computerprogramm-Mittel, kann beispielsweise als (flüchtiges oder nichtflüchtiges) Speichermedium, wie z.B. eine Speicherkarte, ein USB-Stick, eine CD-ROM oder DVD, oder auch in Form einer herunterladbaren Datei von einem Server in einem Netzwerk bereitgestellt oder umfasst werden. Die Bereitstellung kann weiterhin zum Beispiel in einem drahtlosen Kommunikationsnetzwerk durch die Übertragung einer entsprechenden Datei mit dem Computerprogrammprodukt oder dem Computerprogramm-Mittel erfolgen. Ein Computerprogrammprodukt kann Programmcode, Maschinencode, G-code und/oder ausführbare Programmanweisungen im Allgemeinen beinhalten.

Ausgestaltungen, Merkmale und/oder Vorteile, die sich vorliegend auf die Komponente beziehen, können ferner die Verfahrensaspekte bzw. das Computerprogrammprodukt betreffen, und umgekehrt.

Der hier verwendete Ausdruck "und/oder", wenn er in einer Reihe von zwei oder mehreren Elementen oder Aspekten benutzt wird, bedeutet, dass jedes der aufgeführten Positionen alleine verwendet werden kann, oder es kann jede Kombination von zwei oder mehr Elementen bzw. Aspekten verwendet werden.

Weitere Einzelheiten der Erfindung werden nachfolgend anhand der Figuren beschrieben.
Figur 1 zeigt eine schematische Schnittansicht einer Komponente mit einem im Betrieb zu kühlenden Bereich.
Figur 2 zeigt eine schematische Schnittansicht der Komponente mit einem erfindungsgemäß ausgestalteten Kühlkanal.
Figur 3 zeigt eine schematische Schnittansicht der Komponente mit Bezug auf eine Aufbaurichtung eines entsprechenden additiven Herstellungsprozesses.
Figur 4 zeigt eine schematische Ansicht eines Geschwindigkeitsprofils einer Fluidströmung in einem Kanal der in Figur 3 gezeigten Komponente.
Figur 5 zeigt - analog zur Darstellung der Figur 3 - eine alternative Ausrichtung der Komponente relativ zu der Aufbaurichtung.
Figur 6 zeigt - analog zur Darstellung der Figur 4 - ein Geschwindigkeitsprofil einer Fluidströmung in einem Kanal der in Figur 5 gezeigten Komponente.
Figur 7 zeigt eine schematische Querschnittsansicht eines erfindungsgemäßen Kühlkanals.
Figur 8 zeigt eine alternative schematische Querschnittsansicht eines erfindungsgemäßen Kühlkanals.
Figur 9 zeigt eine noch alternative schematische Querschnittsansicht eines erfindungsgemäßen Kühlkanals.
Figur 10 deutet anhand eines einfachen Flussdiagramms erfindungsgemäße Verfahrensschritte an.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

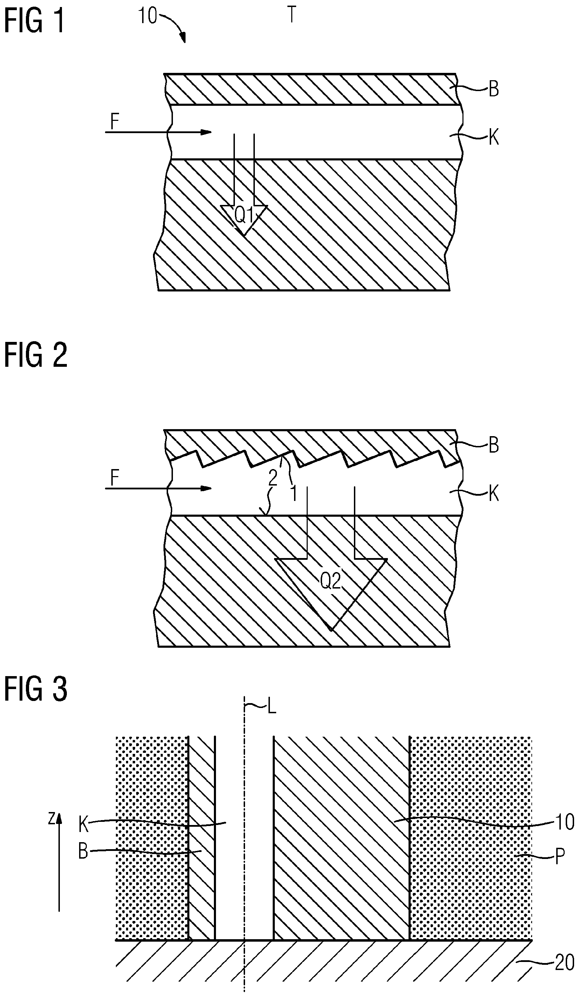

Figur 1 zeigt zumindest einen Teil einer Komponente 10 in einem Längsschnitt. Bei der Komponente 10 handelt es sich vorzugsweise um ein additiv aus dem Pulverbett zu fertigendes, kompliziert geformtes Bauteil aus einem hochtemperaturbeständigen Material.

Die Komponente 10 weist einen im Betrieb derselben zu kühlenden Bereich B auf. Der Bereich B definiert im Betrieb der Komponente vorzugsweise eine Umgebung, durch die die Komponente thermisch hochbelastet wird, wie beispielsweise einen Heißgaspfad einer Gasturbine. Der Bereich B kann demgemäß ein Wandbereich der Komponente 10 sein oder eine entsprechende Wand umfassen.

Zur Kühlung des Bereichs B weist die Komponente 10 weiterhin einen Kühlkanal K auf. Der Kühlkanal K wird vorzugsweise im Betrieb der Komponente 10 von einem Kühlfluid oder einer Fluidströmung F durchströmt, um den Bereich B zu kühlen.

Die Komponente 10 der Figur 1 kann eine Komponente des Standes der Technik darstellen. Insbesondere ist die Kanalseite oder Kanalseitenstruktur bzw. die dadurch gebildete oder Kontaktfläche (in Figur 1 nicht explizit gekennzeichnet), welche eine Wechselwirkung mit dem Kühlfluid bestimmt, vorzugsweise gleichförmig ausgestaltet.

Durch eine Kühlung der Fluidströmung F erfolgt im Betrieb der Komponente 10 vorzugsweise eine Wärmeübertragung oder ein Wärmeübergang einer Wärmemenge Q1 (vgl. nach unten gerichteter Pfeil) von dem Bereich B auf das Kühlfluid F.

Figur 2 zeigt ebenfalls in einem Längsschnitt analog zur Figur 1 - eine erfindungsgemäße Komponente 10. Im Unterschied zur Figur 1 weist der Kühlkanal K, dem Bereich B bzw. der Wand der Komponente 10 zugewandt, vorzugsweise umfänglich, eine erste Kanalseite 1 oder Kanalseitenstruktur auf.

Weiterhin weist der Kühlkanal K, dem Bereich B bzw. der Wand der Komponente 10 abgewandt, vorzugsweise umfänglich, eine zweite Kanalseite 2 auf, welche von der ersten Kanalseite verschieden ist.

Durch die gezackte oder gebogenene Kontur der ersten Kanalseite 1 wird angedeutet, dass diese Kanalseite eine größere Kontaktfläche mit dem Kühlkanal K bildet, als die zweite geradlinig dargestellte Kanalseite 2. Die größere Kontaktfläche der ersten Kanalseite 1 kann beispielsweise durch eine vergrößerte Rauheit oder durch eingebrachte Oberflächenmerkmale hervorgerufen werden. Wie weiter unten dargestellt, werden diese Merkmale oder Artefakte vorzugsweise inhärent durch das pulverbett-basierte additive Fertigungsverfahren ausgebildet bzw. aufgeprägt.

Bei dem Maß der beschriebenen Rauheit kann es sich beispielsweise um eine quadratische Rauheit, einen Mittenrauwert, eine gemittelte Rautiefe oder ein sonstiges einschlägiges Maß handeln.

Die beschriebenen verschieden oder ungleichförmig ausgebildeten Kanalstrukturseiten bewirken im Betrieb der Komponente 10 an der thermisch noch stärker belasteten, dem Bereich B zugewandten Seite 1 auch eine verbesserte Wärmeübertragung, und damit eine verbesserte Kühlwirkung, ohne etwa einen größeren Kühlfluidmassenstrom oder eine größere Kühlfluid-Druckdifferenz bereitstellen zu müssen. Dies bewirkt die vorliegend beschriebenen erfindungsgemäßen Vorteile.

Durch eine Kühlung der Fluidströmung F erfolgt im Betrieb der Komponente 10 vorzugsweise eine Wärmeübertragung bzw. Wärmeübergang einer Wärmemenge Q2 (vergleiche nach unten gerichteter Pfeil) von dem Bereich B auf das Kühlfluid.

Die Wärmemenge Q2 ist wie durch den entsprechend verbreiterten Pfeil angedeutet, größer als die in Figur 1 dargestellte Wärmemenge Q1.

Die Wärmeübertragung kann im idealen oder vereinfachten Fall folgendermaßen gegeben sein bzw. angenähert werden:
Q = α · A · (T 1 - T 2 ) · Δ t, mit Q: übertragene Wärmemenge, A: betrachtete Kontaktfläche, T1 - T2: Temperaturdifferenz, und Δt: betrachtetes Zeitintervall.

Figur 3 zeigt in einem schematischen Längsschnitt weiterhin eine Komponente 10, die einen Kühlkanal K mit einer Längsachse L aufweist. Die Längsachse L des Kühlkanals K ist vorliegend parallel zu einer Aufbaurichtung z, vorliegend einer Vertikalen, ausgerichtet. Die Aufbaurichtung z ist weiterhin senkrecht bzw. normal zu einer Bauplattform 20 (Bauplattformoberfläche) ausgerichtet. Loses, die Komponente während des additiven Aufbaus umgebendes Pulver ist mit dem Bezugszeichen P gekennzeichnet.

Additiven pulverbett-basierten Fertigungsverfahren ist bekanntlich inhärent, dass die Aufbaurichtung senkrecht auf einer durch das Pulverbett gebildeten Herstellungsoberfläche orientiert ist.

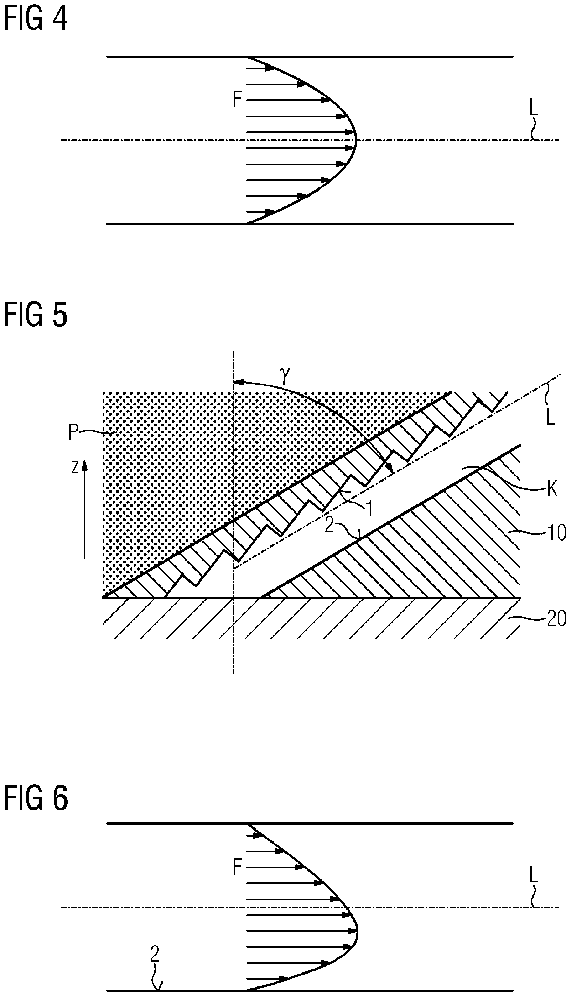

Figur 4 deutet schematisch ein Geschwindigkeitsprofil einer Fluidströmung F durch einen entsprechend in Figur 3 dargestellten Kühlkanal K an. Es ist in Figur 4 zu erkennen, dass sich ein bezüglich der Längsachse L des Kanals symmetrisches, durch die Pfeile angedeutetes Geschwindigkeitsprofil der Fluidströmung F ergibt.

Figur 5 zeigt in einem schematischen Längsschnitt weiterhin eine erfindungsgemäße Komponente 10, welche beispielsweise im Wege einer Fertigungsplanung im Voraus eines entsprechenden additiven Fertigungsprozesses derart relativ zu der Aufbaurichtung z angeordnet wird, dass sich ein Winkel γ zwischen der Längsachse L und der Aufbaurichtung z ergibt.

Der Winkel γ kann vorliegend beispielsweise zwischen 10° und 80° betragen. Dieser erweiterte Winkelbereich ist insbesondere für kleine Kanalabmessungen oder -durchmesser von beispielsweise 5 bis 7 mm, oder weniger als 10 mm vorteilhaft.

Alternativ kann der Winkel γ zwischen 20° und 70° betragen, oder Werte zwischen 30° und 60° annehmen. In allen diesen genannten Bereichen lassen sich die erfindungsgemäßen Vorteile ausnutzen.

In einer Ausgestaltung beträgt der Winkel γ höchstens 60°.

In einer Ausgestaltung beträgt der Winkel γ mindestens 30°.

Figur 6 deutet schematisch ein Geschwindigkeitsprofil einer Fluidströmung F durch den entsprechend in Figur 5 dargestellten Kühlkanal an. Es ist hier zu erkennen, dass sich ein bezüglich der Längsachse L des Kanals K asymmetrisches Geschwindigkeitsprofil ergibt. Dies ist dem Phänomen geschuldet, dass, wie oben beschrieben, die erste Kanalseite eine, beispielsweise durch die Herstellung inhärent ausgebildete, größere Rauheit und größere Kontaktfläche mit dem Kühlkanal K bzw. mit der durch diesen im Betrieb geführten Fluidströmung F bildet.

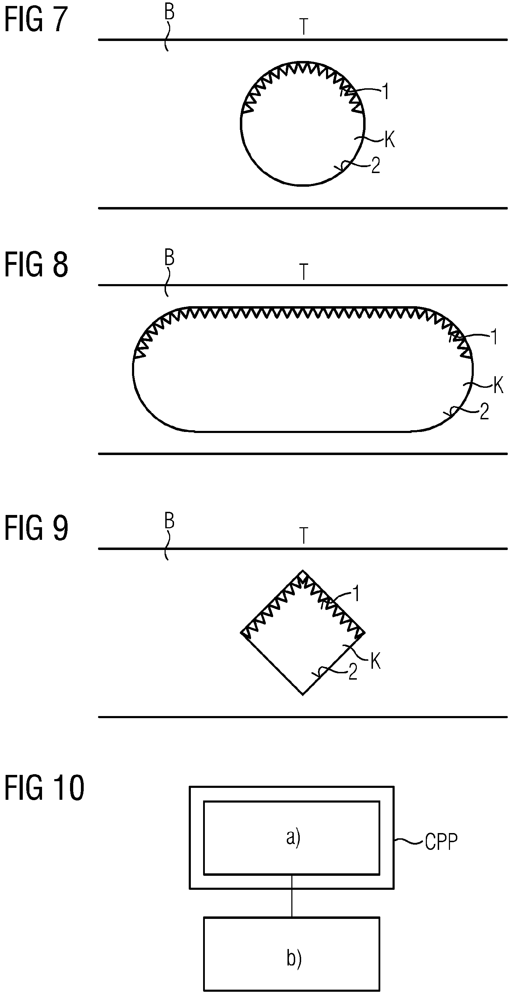

Figur 7 zeigt eine schematische Querschnittsansicht eines erfindungsgemäßen Kanals K. Gemäß dieser Ausgestaltung weist der Kanal einen kreisförmigen Querschnitt auf.

Figur 8 zeigt eine schematische Querschnittsansicht eines erfindungsgemäßen Kanals K. Gemäß dieser Ausgestaltung weist der Kanal einen elliptischen Querschnitt auf.

Figur 9 zeigt eine schematische Querschnittsansicht eines erfindungsgemäßen Kanals K. Gemäß dieser Ausgestaltung weist der Kanal einen rautenförmigen Querschnitt auf.

Obwohl dies nicht explizit in den Figuren gekennzeichnet ist, kann der Querschnitt des Kanals K erfindungsgemäß andere Formen haben, beispielsweise nicht-achsensymmetrische Formen, wie eine Tropfenform, wobei die stumpfe Seite des Tropfens dem Bereich B zugewandt sein kann, eine Trapezform, eine parallelogrammartige Form oder eine andere Form.

Figur 10 deutet anhand eines schematischen Flussdiagramms erfindungsgemäße Verfahrensschritte an, welche sowohl bereits eine Vorbereitung eines entsprechenden pulverbett-basierten additiven Herstellungsprozesses für die Komponente 10, als auch die eigentliche physische additive Herstellung derselben, umfassen.

Das beispielhaft angedeutete Verfahren umfasst die Verfahrensschritte a) und b).

Der Verfahrensschritt a) soll insbesondere ein Verfahren zur Vorbereitung eines pulverbett-basierten additiven Herstellungsprozesses einer Komponente 10 darstellen, wobei eine Orientierung des Kühlkanals K in einer Herstellungsvorbereitung relativ zu einer Aufbaurichtung z derart gewählt wird, dass die erste Kanalseite 1 aufgrund von orientierungsabhängigen bzw. strukturellen Herstellungsartefakten - wie beschrieben - im Vergleich zu der zweiten Kanalseite 2 eine größere Kontaktfläche mit dem Kühlkanal K bildet.

Die genannte Herstellungsvorbereitung liegt erfindungsgemäß in der Festlegung einer geeigneten Bestrahlungsstrategie oder beispielsweise in der Festlegung von Bestrahlungsparametern (wie Laserleistung, Pulsung, oder Schraffurabstand) und erfindungsgemäß in Form von sogenannten CAM-Daten (Computer-Aided-Manufacturing). Demgemäß kann dieser Verfahrensschritt beispielsweise zumindest teilweise durch ein Computerprogramm oder Computerprogrammprodukt CPP ausgeführt werden. Dies ist insbesondere angesichts einer Anzahl von möglicherweise mehreren Millionen einzelnen Bestrahlungsvektoren für komplexe Bauteile eine besonders vorteilhafte Ausgestaltung der Verfahrensvorbereitung.

Der Verfahrensschritt b) soll demgegenüber die eigentliche physische additive Herstellung der Komponente gemäß der beschriebenen Prozessvorbereitung darstellen.

Bei dem Bauteil handelt es sich vorzugsweise um ein Bauteil, welches im Heißgaspfad einer Strömungsmaschine, beispielsweise einer Gasturbine eingesetzt wird. Insbesondere kann das Bauteil eine Lauf- oder Leitschaufel, ein Segment oder Ringsegment, ein Brennerteil oder eine Brennerspitze, eine Zarge, eine Schirmung, ein Hitzeschild, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil.

Obwohl die erfindungsgemäße Ausgestaltung der Kanalseitenstruktur der ersten Kanalseite in den beschriebenen Figuren lediglich vereinfacht und zickzackartig, und in erster Linie eine Rauheit darstellend angedeutet ist, können die erfindungsgemäßen Vorteile ebenfalls gezielt - durch beispielsweise eine spezielle Bestrahlungsstrategie hervorgerufene Merkmale eingebracht werden, die die Turbulenz der Strömung und damit den Wärmeaustrag von dem Bereich B in das Fluid F steigern.

## Patentansprüche

1. Verfahren zur Vorbereitung eines pulverbett-basierten additiven Herstellungsprozesses, **dadurch gekennzeichnet, dass** es die Festlegung einer geeigneten Bestrahlungsstrategie in Form von CAM-Daten umfasst, für eine Komponente (10) mit einem zu kühlenden Bereich (B), aufweisend einen Kühlkanal (K), welcher angeordnet und ausgebildet ist, den Bereich (B) der Komponente im Betrieb mittels einer Fluidströmung (F) zu kühlen, wobei der Kühlkanal (K) - dem Bereich (B) zugewandt - durch eine erste Kanalseite (1), und - dem Bereich abgewandt - durch eine zweite Kanalseite (2) definiert ist, und wobei die erste Kanalseite (1) eine größere Kontaktfläche mit dem Kühlkanal (K) bildet, als die zweite Kanalseite (2), wobei eine Orientierung des Kühlkanals (K) in einer Herstellungsvorbereitung relativ zu einer Aufbaurichtung (z) derart gewählt wird, dass die erste Kanalseite (1) aufgrund von orientierungsabhängigen Herstellungsartefakten im Vergleich zu der zweiten Kanalseite (2) eine größere Kontaktfläche mit dem Kühlkanal (K) bildet.

2. Verfahren gemäß Anspruch 1, wobei ein Winkel (γ) zwischen einer Aufbaurichtung (z) der Komponente (10) und einer Längsachse (L) des Kühlkanals (K) zwischen 30° und 60° beträgt.

3. Verfahren gemäß Anspruch 1 oder 2, wobei ein Winkel (γ) zwischen einer Aufbaurichtung (z) der Komponente (10) und einer Längsachse (L) des Kühlkanals (K) höchstens 60° beträgt.

4. Verfahren gemäß einem der vorhergehenden Ansprüche, wobei ein Winkel (γ) zwischen der Aufbaurichtung (z) der Komponente (10) und einer Längsachse (L) des Kühlkanals (K) mindestens 30° beträgt.

5. Verfahren zur pulverbett-basierten additiven Herstellung einer Komponente (10), umfassend das Verfahren zur Vorbereitung gemäß einem der vorhergehenden Ansprüche.

6. Computerprogrammprodukt (CPP), umfassend Befehle, die bei der Ausführung eines entsprechenden Computerprogramms durch einen Computer diesen veranlassen, das Verfahren nach einem der Ansprüche 1 bis 4 auszuführen.

## Claims

1. Method for preparing for a powder-bed-based additive manufacturing process, **characterized in that** it comprises establishing a suitable irradiation strategy in the form of CAM data, for a component (10) with a region (B) to be cooled, having a cooling channel (K), which is arranged and designed to cool the region (B) of the component during operation by means of a fluid flow (F), wherein the cooling channel (K) is defined - facing toward the region (B) - by a first channel side (1) and - facing away from the region - by a second channel side (2), and wherein the first channel side (1) forms a greater contact surface area with the cooling channel (K) than the second channel side (2), wherein, in preparation for the manufacture, an orientation of the cooling channel (K) is chosen in relation to a building-up direction (z) in such a way that the first channel side (1) forms a greater contact surface area with the cooling channel (K) in comparison with the second channel side (2) on account of orientation-dependent manufacturing artefacts.

2. Method according to Claim 1, wherein an angle (γ) between a building-up direction (z) of the component (10) and a longitudinal axis (L) of the cooling channel (K) is between 30° and 60°.

3. Method according to Claim 1 or 2, wherein an angle (γ) between a building-up direction (z) of the component (10) and a longitudinal axis (L) of the cooling channel (K) is at most 60°.

4. Method according to one of the preceding claims, wherein an angle (γ) between the building-up direction (z) of the component (10) and a longitudinal axis (L) of the cooling channel (K) is at least 30°.

5. Method for the powder-bed-based additive manufacture of a component (10), comprising the method for preparation according to one of the preceding claims.

6. Computer program product (CPP), comprising commands which, during the execution of a corresponding computer program by a computer, cause the latter to perform the method according to one of Claims 1 to 4.

## Revendications

1. Procédé de préparation d'un processus de fabrication additive à base de lit de poudre, **caractérisé en ce qu'**il comprend la fixation d'une stratégie appropriée d'exposition à du rayonnement sous la forme de données CAM,
pour un composant (10) ayant une partie (B) à refroidir, comportant un conduit (K) de refroidissement, qui est disposé et constitué, de manière à refroidir la partie (B) du composant en fonctionnement au moyen d'un courant (F) de fluide, dans lequel le conduit (K) de refroidissement - tourné vers la partie (B) - est défini par un premier côté (1) de conduit et - non tourné vers la partie - par un deuxième côté (2) de conduit, et dans lequel le premier côté (1) de conduit forme, avec le conduit (K) de refroidissement, une surface de contact plus grande que le deuxième côté (2) de conduit, dans lequel on choisit une orientation du conduit (K) de refroidissement dans une préparation de fabrication par rapport à une direction (z) de construction, de manière à ce que le premier côté (1) de conduit forme, en raison d'artefacts de fabrication, qui dépendent de l'orientation par rapport au deuxième côté (2) de conduit, une surface de contact plus grande avec le conduit (K) de refroidissement.

2. Procédé suivant la revendication 1, dans lequel un angle (γ) entre une direction (z) de construction du composant (10) et un axe (L) longitudinal du conduit (K) de refroidissement est compris entre 30° et 60°.

3. Procédé suivant la revendication 1 ou 2, dans lequel un angle (γ) entre une direction (z) de construction du composant (10) et un axe (L) longitudinal du conduit (K) de refroidissement est de 60° au plus.

4. Procédé suivant l'une des revendications précédentes, dans lequel un angle (γ) entre une direction (z) de construction du composant (10) et un axe (L) longitudinal du conduit (K) de refroidissement est d'au moins 30°.

5. Procédé de fabrication additive à base de lit de poudre d'un composant (10), comprenant le procédé de préparation suivant l'une des revendications précédentes.

6. Produit (CPP) de programme d'ordinateur, comprenant des instructions, qui lors de l'exécution d'un programme d'ordinateur correspondant par un ordinateur, font que celles-ci exécutent le procédé suivant l'une des revendications 1 à 4.
